Europäisches Patentamt

European Patent Office

Office européen des brevets

(19)

(11) Publication number: **0 159 076**
**B1**

(12) **EUROPEAN PATENT SPECIFICATION**

(45) Date of publication of patent specification: **28.09.88**

(51) Int. Cl.⁴: **A 22 C 21/00**

(21) Application number: **85200466.2**

(22) Date of filing: **25.03.85**

(54) **Device for cutting off the wings of slaughtered poultry.**

(30) Priority: **09.04.84 NL 8401121**

(43) Date of publication of application:
**23.10.85 Bulletin 85/43**

(45) Publication of the grant of the patent:
**28.09.88 Bulletin 88/39**

(84) Designated Contracting States:
**AT BE CH DE FR GB IT LI LU NL SE**

(56) References cited:
**WO-A-82/00001**
**GB-A- 454 006**
**GB-A-1 046 960**
**US-A-2 807 046**
**US-A-3 639 945**
**US-A-3 731 344**
**US-A-4 424 608**

(73) Proprietor: **STORK PMT B.V.**
**43a Wim de Körverstraat**
**NL-5831 AN Boxmeer (NL)**

(72) Inventor: **Van der Eerden, Henricus F.J.M.**
**De Blauwverver 74**
**NL-5283 XW Boxtel (NL)**

(74) Representative: **Timmers, Cornelis Herman**
**Johannes et al**
**EXTERPATENT P.O. Box 90649**
**NL-2509 LP 's-Gravenhage (NL)**

Courier Press, Leamington Spa, England.

# Description

The invention relates to a device for separating the wings from the trunk of slaughtered poultry, comprising two wing cutting knives, two wing supports and trunk positioning means to move the poultry in a position for cutting off the wings by the knives the device being intended to be positioned beneath a conveyor track on which the poultry is conveyed hanging by its legs.

Such a device is known from US—A3.639.945. In this known device the birds are processed and divided into separate parts while the body is supported in a kind of support cradle or guided in a complicated system of guide rods and driving means. This known device therefore cannot be incorporated in a processing plant in which the poultry is carried by the legs on a conveyor track while a number of cutting-up and dividing-off operations are performed thereon in various successive processing stations.

The invention aims to provide a device which meets this latter requirement and can easily be incorporated in such a processing plant, either new or already existing. According to the invention this is obtained in that the knives are attached to a disk-shaped knife carrier with laterally diverging flanges acting as the positioning means, the carrier being rotatably driven so that the knives cut in the conveying direction while the length of the wing supports when viewed transversely of the conveying direction, spans the track of the knife.

The flanges position the bird relative to the cutting knife, while the two wing supports provide support to the wings during the cutting operation. The knives moving in the conveying direction then overtake, during their rotational movement, the bird from behind, penetrate into the V-shaped space between wing and body and subsequently sever the joint at the correct position between knob and socket.

A reliable operation is obtained with a simple construction.

The device is preferably provided with an elongate lever-arm which can rotate around an axis below the level of the wing supports and extends, as seen in the conveying direction, upwardly, of which arm one end, lying below the said axis co-operates with a control curve formed in the central groove between the flanges of the disk and of which arm the other end acts as a stop for the trunk of the poultry. As a result of this the bird can be held back until the instance at which the cutting knives are pressed through between the wing joints and the wings are separated.

In an advantageous embodiment of the support means these are formed by elongate guides whose ends are directed towards one another and which grip around the edge flanges. Preferably each knife is provided with two cutting edges having a V-shaped configuration and each preceded by a noncutting inlet edge part. This measure ensures that the cut is always made at the correct position since the inlet edge parts position the bird portions relative to the cutting edges following in the direction of movement of the latter. These last-mentioned cutting edges are preferably formed in a knife part diverging towards the outside.

In certain cases it is desired that, prior to being further divided up, two mutually distand incisions are made in the birds in the longitudinal direction of the back. That is the case for example when so-called "breast portion parts having long ribs" are desired during the subsequent cutting up of the bird, which on removal of the breast fillet parts result in larger fillets. Incisions of this type can be made during the procedure of separating off the wings by using two additional cutting knives set up between the wing-cutting knives and transversely on the axis of rotation, each having a hook-shaped cutting edge of the open part of which is directed in the direction of movement.

It has been found in practice that the device according to the invention not only makes possible safe and reliable cutting through the joint of the wing attached but also that with this method less meat is cut off the breast portion so that the latter represents a higher value.

The invention will be elucidated with reference to the drawing.

Figure 1 is a side view of an embodiment according to the invention;

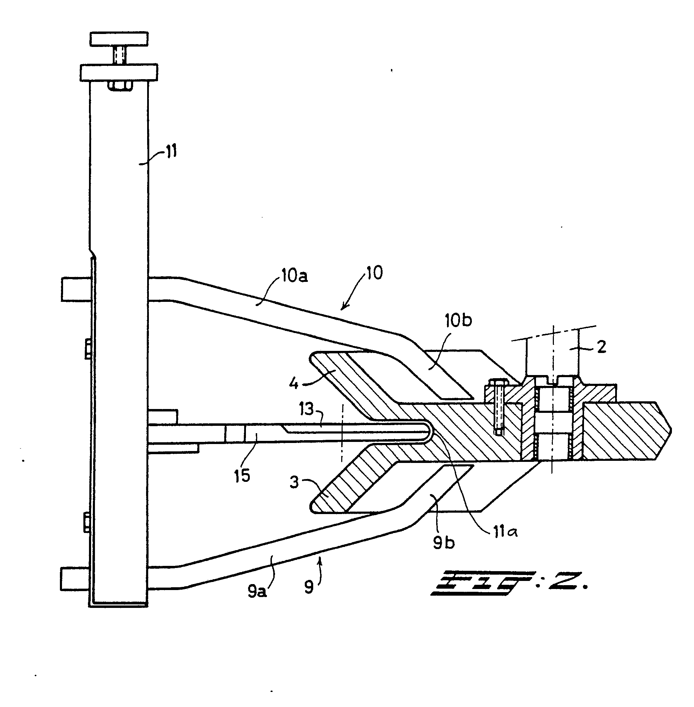

Figure 2 is a top view of this embodiment (the cutting knives being omitted);

Figure 3a is a side view of the cutting knives, in combination with back-cutting knives, used in this embodiment;

Figure 3b is a side view of these knives;

Figure 4 is a perspective view of the device according to the invention;

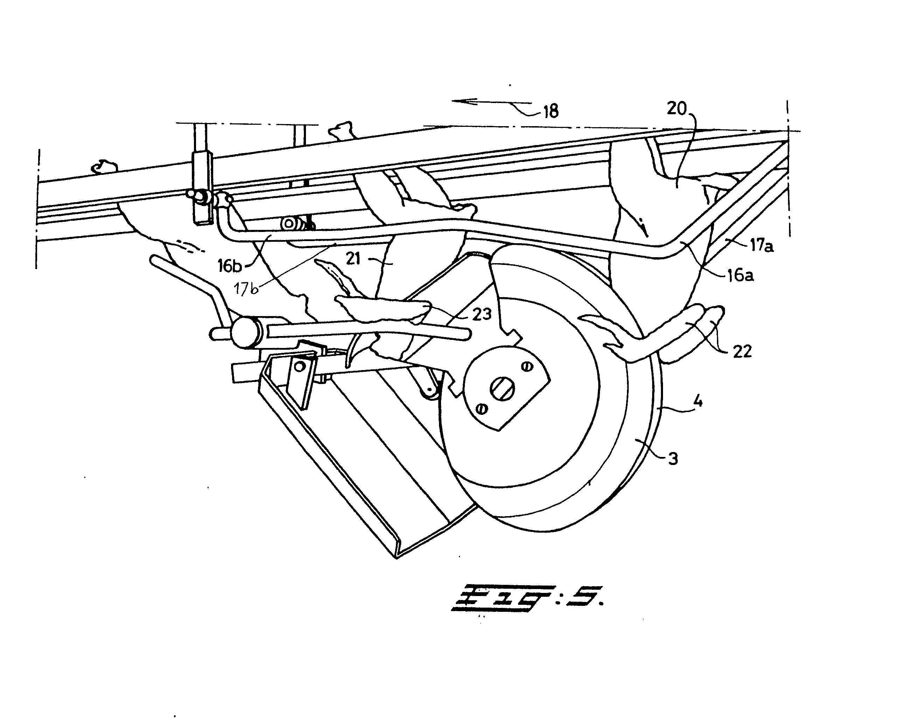

Figure 5 is a further perspective view of this device.

The embodiment shown in the figures comprises a disc-shaped knifecarrier 1, preferably made of plastic, which is driven rotatably about axis 2 and is provided over part of its contour with diverging flanges 3, 4. An insert piece 5 having two cutting knives one of which is shown and denoted by reference numeral 6, is fixed in the disc, each knife consisting of a part 6a standing transversely on the axis and of a part 6b, standing at an angle thereto. Each one of these parts such as the shown part 6b has two cutting edges 6c, 6d, respectively, standing at an angle relative to one another and having noncutting positioning edges such as the edges 6e, 6f of the knife 6 preceding as seen in the direction of movement of the parts 6c and 6d.

The disc is rotatably driven in the direction of arrow 8 via the axis 2 and both the flanges 3, 4 and the knives move during this rotation between two support rods 9, 10 which are fixed to a carrier 11. Each support rod 9, 10 has a first part 9a, 10a which forms a relatively small angle with the central longitudinal surface of the disc-shaped carrier 1 and a second end part 9b, 10b respectively which is positioned at a sharper angle and of which the ends virtually reach the body of the disc.

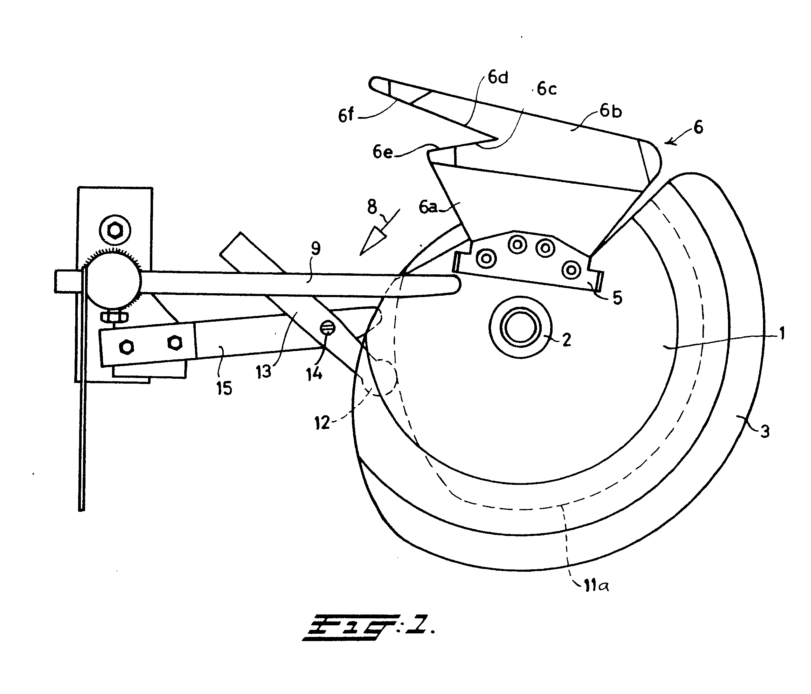

In the embodiment shown a guide curve 11a is formed in the central longitudinal surface of the disc (shown with dotted lines in Figure 1), this curve cooperating with roller 12 which is located at the lower end of an elongate stop 13 which is capable of tilting about the support rod 15 via an axis of rotation 14. This tiltable stop can also be replaced by a fixed stop and is of particular advantage when during separation of the wings incisions are formed at the same time in the back, as will be described below.

Above the abovementioned elements are located two guide rods 16, 17 each consisting of feed parts 16a, 17a slightly sloping and converging in the direction of movement of the poultry (indicated by arrow 18) followed by diverging outlet parts 16b, 17b.

The device operates as follows:

The bird 20 is fed, hanging by the legs, on a suitable conveyor track and arrives with its breast 21 in the positioning groove between flanges 3, 4.

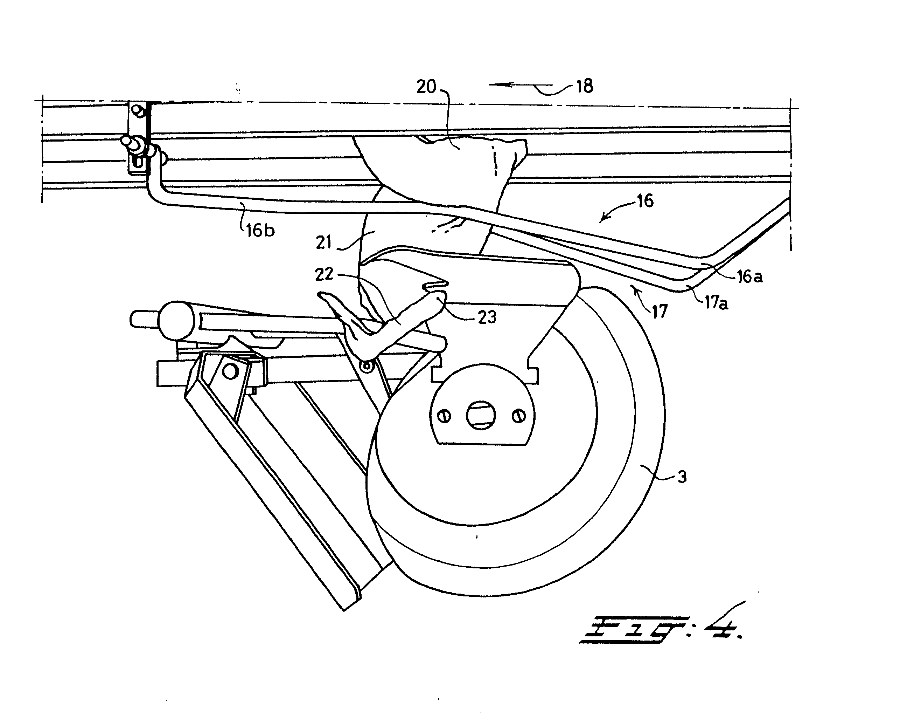

As a result of the rotating disc having flanges the bird is moved more quickly in the direction of movement so that, when the knives catch the bird, the latter always has the position shown in Figure 4.

During this procedure the wings 22 projecting from the body come to rest with their central joint 23 above the support rods 9, 10 and the attachment places between wing and trunk are cut through by the cutting edges such as the cutting edges 6c, 6d coming from behind, of the rotating knives. These attachments places are well positioned relative to the cutting edges by the noncutting positioning edges, such as 6e and 6f. The trunk portions without the wings can then be transported to another device downstream from the wing-cutting device or can be removed directly from the device.

It is important that, when the cutting knives are in the lowermost position, the cooperation between the control curve 11a and the roller 12 raises the elongate stop 13 and keeps the bird back; during further rotation of the disc the curve part located radially move inwards becomes operative and can tilt away the stop.

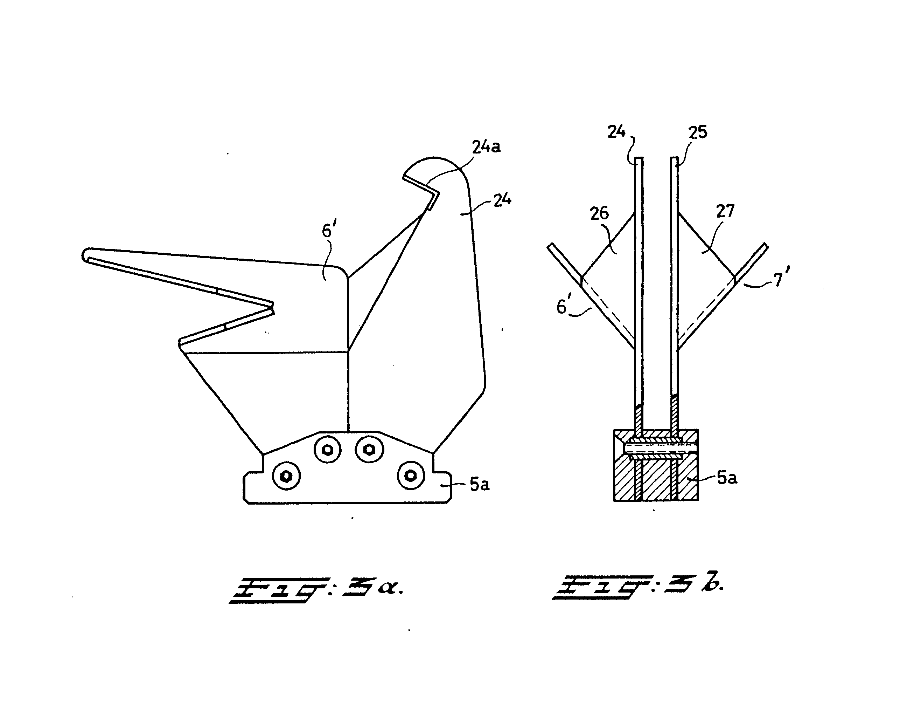

It is also possible to use a knife carrier having two additional knives by means of which two parallel cuts can be made at the same time in the back of the bird during the cutting-off operation of the wings, this being desirable for certain dividing-up procedures for example when breast portions having so-called "long ribs" are desired. Figures 3a and 3b show a side view and an end view respectively of a knifecarrier 5a having two wing-cutting knives 6', 7' and two straight knives 24, 25 standing transversely on the axis of rotation and each having a hook-shaped cutting edge one of which is shown and denoted by reference number 24a. Guide plates 26 and 27 respectively are arranged between the knives 6' and 24 and 7' and 25 respectively; the inlet and cutting edges of the knives 6' and 7' are designed as described for knife 6.

The opening angle of the cutting edges has an effect on the amount of meat which is cut off the breast of the bird during severing of the wings: a large opening angle has the result that more meat is cut off the breast. Depending on the type of bird to be processed this angle can be optimally chosen; the easy replaceability of the knifecarrier makes the device rapidly adaptable to a new situation.

**Claims**

1. Device for separating the wings (22) from the trunk (21) of slaughtered poultry (20), comprising two wing cutting knives (6, 7), two wing supports (9b, 10b) and trunk positioning means to move the poultry in a position for cutting off the wings by the knives, the device being intended to be positioned beneath a conveyor track on which the poultry (20) is conveyed hanging by its legs, characterised in that the knives are attached to a disk-shaped knife carrier (1) with laterally diverging flanges (3, 4) acting as the positioning means, the carrier being rotatably driven so that the knives cut in the conveying direction (18) while the length of the wing supports, when viewed transversely to the conveying direction, spans the track of the knife.

2. Device according to claim 1, characterized by an elongate lever-arm (13) which can rotate around an axis (14) below the level of the wing supports (9b, 10b) and extends, as seen in the conveying direction, upwardly, of which arm one end, lying below the said axis co-operates with a control curve (11) formed in the central groove between the flanges (3, 4) of the disk (1) and of which arm the other end acts as a stop for the trunk of the poultry.

3. Device according to claims 1—2, characterized in that the support means are formed by elongate guides (9, 10) which grip around the edge flanges (3, 4) and the ends (9b, 10b) of which are directed towards one another.

4. Device according to Claims 1—3, characterised in that each knife (6,) is provided with two cutting edges (6c, 6d;) set up in a V-shaped configuration and each preceded by a noncutting inlet edge part (6e, 6f).

5. Device according to Claim 4, characterised in that the cutting edges (6c, 6d;) are formed in a knife part diverging towards the outside.

6. Device according to Claims 1—5, characterised by two additional cutting knives (24, 25) set up between the cutting knives (6', 7') and transversely on the axis of rotation (2), each having a hook-shaped cutting edge, the open part of which is directed in the direction of rotation (8).

7. Device according to Claims 1—6, characterised by a support guide (26, 27) for the upper leg portions of the poultry set up on either side of the knife carrier (5a) and above the latter.

**Patentansprüche**

1. Vorrichtung zum Trennen der Flügel (22) vom Rumpf (21) geschlachteten Geflügels (20), enthaltend zwei Flügelschneidmesser (6, 7), zwei Flügelhalter (9b, 10b) und Rumpfpositioniereinrichtungen, um das Geflügel in eine Lage zum Abschneiden der Flügel durch die Messer zu bewegen, wobei die Vorrichtung dazu bestimmt ist, unter einem Förderband angeordnet zu werden, auf dem das Geflügel (20) an seinen Füßen hängend fortbewegt wird, dadurch gekennzeichnet, daß die Messer an einem scheibenförmigen Messerträger (1) mit quer auseinanderlaufenden Flanschen (3, 4) befestigt sind, die als Positioniereinrichtung wirken, wobei der Träger drehbar angetrieben ist, sodaß die Messer in der Förderrichtung (18) schneiden, während die Länge der Flügelhalter, quer zur Förderrichtung gesehen, die Spur des Messers überspannt.

2. Vorrichtung nach Anspruch 1, gekennzeichnet durch einen langgestreckten Hebelarm (13), der um eine Achse (14) unterhalb der Höhe der Flügelhalter (9b, 10b) rotieren kann und sich in Förderrichtung gesehen nach oben erstreckt, von welchem Arm ein Ende, das unter der genannten Achse liegt, mit einer Steuerkurve (11) zusammenwirkt, der in der mittleren Rille zwischen den Flanschen (3, 4) der Scheibe (1) ausgebildet ist, und von welchem Arm das andere Ende als Anschlag für den Körper des Geflügels wirkt.

3. Vorrichtung nach den Ansprüchen 1 und 2, dadurch gekennzeichnet, daß die Halteeinrichtungen von langgestreckten Führungen (9, 10) gebildet sind, die um die Randflanschen (3, 4) greifen und deren Enden (9b, 10b) gegeneinander gerichtet sind.

4. Vorrichtung nach den Ansprüchen 1 bis 3, dadurch gekennzeichnet, daß jedes Messer (6) mit zwei Schneidkanten (6c, 6d) versehen ist, die V-förmig angeordnet sind und denen jeweils ein nicht schneidender Einlaßkantenabschnitt (6e, 6f) vorangeht.

5. Vorrichtung nach Anspruch 4, dadurch gekennzeichnet, daß die Schneidkanten (6c, 6d) in einem Messerteil ausgebildet sind, das zur Außenseite auseinanderläuft.

6. Vorrichtung nach den Ansprüchen 1 bis 5, dadurch gekennzeichnet, daß zwei zusätzliche Schneidmesser (24, 25) zwischen den Schneidmessern (6, 7) und quer auf der Drehachse (2) angeordnet sind, die jeweils eine hakenförmige Schneidkante aufweisen, deren offener Abschnitt in die Drehrichtung (8) gerichtet ist.

7. Vorrichtung nach den Ansprüchen 1 bis 6, gekennzeichnet durch eine Halteführung (26, 27) für die oberen Fußteile des Geflügels, die zu beiden Seiten des Messerträgers (5a) und oberhalb desselben angeordnet sind.

**Revendications**

1. Dispositif pour séparer les ailes (22) du corps (21) de volailles abattues (20), comprenant deux couteaux de coupe des ailes (6, 7), deux supports d'ailes (9b, 10b) et des moyens de postionnement du corps pour amener la volaille dans une position dans laquelle les couteaux peuvent couper les ailes, le dispositif étant prévu pour être disposé en-dessous d'un rail transporteur sur lequel les volailles (20) sont transportées, pendues par les pattes, caractérisé en ce que les couteaux sont fixés sur un porte-couteaux discoïdal (1) avec des rebords divergeant latéralement (3, 4) servant de moyens de positionnement, le porte-couteaux étant entraîné en rotation, de telle sorte que les couteaux coupent dans la direction du transport (18), tandis que la longueur des supports d'ailes, vus transversalement à la direction du transport, recouvre le trajet des couteaux.

2. Dispositif selon la revendication 1, caractérisé par un bras allongé (13) qui peut pivoter autour d'un axe (14) situé en-dessous du niveau des supports d'ailes (9b, 10b) et qui s'étend vers le haut, vu dans la direction du transport, l'extrémité de ce bras située en-dessous de l'axe coopérant avec une came de commande (11a) formée dans la gorge centrale entre les rebords (3, 4) du disque (1), et l'autre extrémité de ce bras servant de butée pour le corps de la volaille.

3. Dispositif selon les revendications 1 et 2, caractérisé en ce que les moyens de support sont formés par des guides allongés (9, 10) qui passent autour des rebords (3, 4) et dont les extrémités (9b, 10b) sont dirigées l'une vers l'autre.

4. Dispositif selon les revendications 1 à 3, caractérisé en ce que chaque couteau (6) comporte deux arêtes tranchantes (6c, 6d), disposées en forme de V, chacune étant précédée par un bord d'introduction non coupant (6e, 6f).

5. Dispositif selon la revendication 4, caractérisé en ce que les arêtes tranchantes (6c, 6d) sont formées dans une partie du couteau divergeant vers l'extérieur.

6. Dispositif selon les revendications 1 à 5, caractérisé en ce que deux couteaux additionnels (24, 25) sont montés entre les couteaux de coupe des ailes (6', 7') et transversalement par rapport à l'axe de rotation (2), chacun ayant une arête tranchante en forme de crochet dont la partie ouverte est dirigée dans le sens de la rotation (8).

7. Dispositif selon les revendications 1 à 6, caractérisé en ce qu'un guide support (26, 27), pour les portions de pattes supérieures de la volaille, est disposé de part et d'autre du porte-couteaux (5a) et au-dessus de celui-ci.

*Fig.1.*

0 159 076

_FIG. 2._

Fig. 3a.

Fig. 3b.

0 159 076

Fig. 4

Fig: 5.

0 159 076